**Europäisches Patentamt**

**European Patent Office**

**Office européen des brevets**

(11) Veröffentlichungsnummer: **0 081 697**
**B1**

# (12) EUROPÄISCHE PATENTSCHRIFT

(45) Veröffentlichungstag der Patentschrift:
22.07.87

(21) Anmeldenummer: **82110620.0**

(22) Anmeldetag: **18.11.82**

(51) Int. Cl.⁴: **B 24 D 18/00,** B 23 P 5/00,
B 23 D 65/00, B 23 D 61/18

(54) **Verfahren und Vorrichtung zum Aufbringen von härteren Teilchen auf ein kreisrundes oder längskantenloses drahtförmiges Gebilde.**

(30) Priorität: **28.11.81 DE 3147287**

(43) Veröffentlichungstag der Anmeldung:
**22.06.83 Patentblatt 83/25**

(45) Bekanntmachung des Hinweises auf die Patenterteilung:
**22.07.87 Patentblatt 87/30**

(84) Benannte Vertragsstaaten:
**AT BE CH DE FR GB IT LI LU NL SE**

(56) Entgegenhaltungen:
**DE-A-2 142 002**
**DE-A-2 303 897**
**FR-A-1 176 084**
**US-A-3 150 470**

(73) Patentinhaber: **Heckler & Koch Maschinen- und Anlagenbau GmbH, Seedorferstrasse 91, D-7230 Schramberg- Waldmössingen (DE)**

(72) Erfinder: **Ebner, Walter, Grande Rue 3, CH- 2400 Le Locle (CH)**

(74) Vertreter: **Troesch, Hans Alfred, Dr. Ing. Dr. Troesch AG Patentanwälte VSP, Walchestrasse 19, CH- 8035 Zürich (CH)**

## Beschreibung

Die vorliegende Erfindung betrifft ein Verfahren und eine Vorrichtung zum Aufbringen von härteren Teilchen auf ein kreisrundes oder längskantenloses, drahtförmiges Gebilde, um dessen Oberfläche ganz oder teilweise mit den härteren Teilchen zu besetzen, zwecks Herstellung einer Einfach- oder Mehrfachsäge.

Mit harten Teilchen, beispielsweise Diamantstaub, beschichtete Drähte, welche als Säge benutzt werden, sind bekannt. Derartige, sog. Drahtsägen, sind beiderends offene Gebilde, da es anscheinend nicht gelungen war, Endlosdrähte ohne Schweissnaht zu erstellen. Durch Erhöhung der beschichteten Drahtlänge mit härteren Teilchen kann bei einer Hin- und Her-Sägebewegung die Anzahl der Umschaltungen pro Zeiteinheit verringert werden, was für diese Sägedrähte eine längere Standzeit ergibt.

Diese Erkenntnis macht sich seit Jahren die Firma Laser Technology Incorp. in North Hollywood zu Nutzen.

Dieser, als Diamantsägedraht bezeichnete Sägedraht hat sich indessen in der damaligen Ausführung nicht voll bewährt, da er sich sehr schnell abnützte. Die Diamantpartikel wurden beim Sägevorgang ausgerissen und das Grundmaterial war durch den Beschichtungsprozess derart spröde geworden, dass der Sägedraht wegen Zerreissens nicht nur ausfiel, sondern völlig unbrauchbar wurde.

Anhand eingehender Versuche zeigte es sich, daß auch ein Einwalzen von Diamantstaub mit Hilfe eines Rollenpaares aus gehärtetem Stahl nicht den ersehnten Erfolg brachte, obwohl eine solche Drahtsäge höhere Lebenserwartung aufwies. Dagegen konnte der Diamantstaub nicht mit einer geforderten Regelmäßigkeit auf den als Grundelement dienenden Draht aufgewalzt werden, so daß die Schnitteigenschaften des Drahtes nicht die erwarteten Verbesserungen brachten.

Aus der DE-A- 23 03 897 ist ein Verfahren zur Herstellung eines Schneidwerkzeugs für Stein bekannt, bei dem ein Band zunächst an den Schmalseiten mit Öl oder Fett versehen wird und anschließend eine Station mit Diamantenkörnern durchläuft, in der die Körner an den mit Öl oder Fett versehenen Bereichen haften. In nachgeschalteten Waltzen werden die Körner dann in das Band eingedrückt, das Band wird anschließend mechanisch tordiert und das tordierte Band in einer Heizeinrichtung ausgehärtet. Durch Verwendung eines weichen Bandes wird zwar dabei das Eindrücken der Diamantenkörner vereinfacht, anschließend wird jedoch ein Aushärten des Bandes erforderlich, das deswegen sehr diffizil ist, weil bei zu hoher Aushärtetemperatur die Diamantenkörper irreparablen Schaden nehmen können. Weiterhin kann das Aufbringen der Diamantenkörner auf mit Öl oder Fett versehene Bereiche nachteilig sein, da die Bereiche nicht genau definiert werden können und durch äußere Einflüsse beim Herstellungsprozeß leicht verwischt werden können. Schließlich ist es bei dem bekannten Verfahren erforderlich, die zum Abführen der Sägespäne erforderlichen freien Räume durch Tordieren eines Bandes herzustellen, so dass insgesamt ein präziser und von Rattermarken freier Sägeschnitt nicht erzielbar ist.

Zum Stande der Technik gehört ferner die FR-A- 1 176 084. Diese beschreibt das Einwalzen abrasiver Teilchen, wie Diamant, Korund und anderer harter Materialien in eine Trägerscheibe. Die offenbarte Neuerung basiert auf der Überzeugung, dass nur Weichholz die Möglichkeit bietet, abrasive Teilchen ohne sonstige Verbindungsmittel auf der Trägerscheibe zu befestigen, wobei man diese Teilchen in einem ersten Arbeitsgang haftend auf die Umfangsfläche der Scheibe durch Verwendung ebener Flächen aufbringt, um in einem zweiten Arbeitsgang diese Teilchen mittels Kalanderwalzen in das weiche Holz entsprechend tief einzuwalzen.

Abrasivteilchen in Weichholz einzupressen erlaubt aber die Herstellung einer drahtähnlichen Säge zum Sägen von Steinmaterial u. dgl. bei weitem noch nicht. Ein derartiges Verfahren auf Trägerscheiben härteren Materials wird in dieser Patentschrift weder erwähnt noch als aussichtsreich empfohlen, sondern, zwar unausgesprochen, als nicht erwähnenswert, de facto verworfen.

Auch die DE-A- 2 142 002 gehört mit ihrer Beschreibung einer Schneidvorrichtung zum Stande der Technik, wobei diese Vorveröffentlichung die Idee offenbart, anstelle von Sägeblättern bekannter Art für das Schneiden von harten Stoffen, wie feuerfesten Materialien, keramischen Kunststoffen, Glasfaserwerkstoffen, Gestein, Fels, Granit, Marmor u. dgl., ein langgestrecktes flexibles bzw. biegungsfähiges, fadenförmiges Tragorgan für den Schneidstoff zu verwenden. Das Aufbringen der entsprechenden Hartteilchen, wie Diamantpulver u. dgl., wird nicht besonders erläutert, indem ausgeführt wird, natürliches oder synthetisch abrasives Material, wie Diamantpartikel o. dgl., würden auf die Oberfläche aufgebracht oder dort imprägniert. Auch könne der Draht oder Stab mit einem solch abrasiven Material überzogen werden.

Wie dieses Überziehen oder Aufbringen zu geschehen hat, erwähnt diese Vorveröffentlichung nicht. Es ist auch keine Rede davon, das Material auf den hochzugfesten, drahtförmigen duktilen Träger aufzubringen und einzuwalzen, so dass auch diese Vorveröffentlichung für die Lösung der gestellten Aufgabe dem Fachmann keinen Anhaltspunkt geben kann.

Der Erfindung liegt demgegenüber die Aufgabe zugrunde, ein Verfahren zu schaffen, welches erlaubt, ohne Nachteil am drahtförmigen gehärteten Grundmaterial noch härtere Teilchen, wie Diamantstaub o. dgl. derart direkt am Grundmaterial zu befestigen, dass dieser keinen Schaden leidet, eine beliebige reproduzierbare Beschichtung, also insbesondere auch eine in der Drahtlänge zusammenhängende, herzustellen, wobei diese Beschichtung makroskopisch homogen beschaffen ist und so ausgebildet sein kann, dass Freiräume zum Abführen der Sägespäne entstehen, gleichzeitig jedoch die Drahtstruktur als zylindrischer Körper derart erhalten bleibt, dass hochpräzise Schnitte mit glatten Schnittflächen möglich sind.

Diese Aufgabe wird durch die in den nebengeordneten Ansprüchen 1 und 5 angegebenen Massnahmen gelöst.

In diesem Sinne zeichnet sich das erfindungsgemässe Verfahren dadurch aus, dass man in einem einzigen Verfahrensschritt sowohl das Auftragen auf das als auch das Einpressen der Teilchen in das Gebilde vornimmt, und dass man das Gebilde während dieses Verfahrensschrittes um seine Längsachse drehend bewegt und es gleichzeitig kontinuierlich oder anschliessend taktweise in Richtung seiner Längsachse verschiebt.

Dieses Verfahren ermöglicht, es Einfach- oder Mehrfach-Drahtsägen herzustellen, welche die gestellte Aufgabe zufriedenstellend lösen. Die Erfindung wird anschliessend beispielsweise anhand einer Zeichnung erläutert.

Es zeigen in sehr vereinfachten Darstellungen:

Fig. 1 ein Handwerkzeug in Aufsicht zum Beschichten eines Drahtes mit härteren Teilchen,

Fig. 2 das Handwerkzeug nach Fig. 1 von der Seite "A" gesehen,

Fig. 3 eine Beschichtungsmaschine von vorne,

Fig. 4 die Beschichtungsmaschine nach Fig. 3 in Seitenansicht,

Fig. 5 einen Ausschnitt aus einem beschichteten Draht,

Fig. 6 eine Ansicht analog Fig. 5 mit einer andern Form der Beschichtung,

Fig. 7 einen Längsschnitt durch einen Draht mit eingebetteten Hartteilchen.

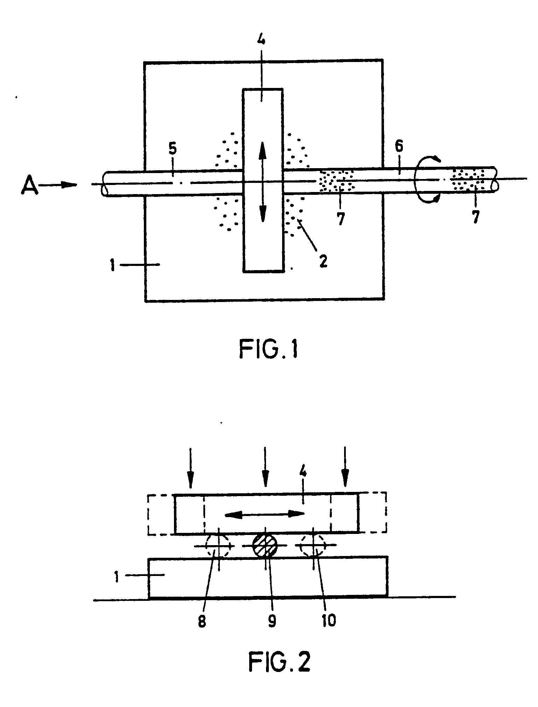

Die Fig. 1 und 2 zeigen rein schematisch eine gehärtete Stahlgrundplatte 1, auf welcher, mittels eines Haftmittels besprüht, Diamantstaub 2 aufgestreut ist. Eine gehärtete Stahlpressplatte 4, von Hand unter Druck hin und her bewegbar, ruht auf dem zu beschichtenden Draht, welcher von einer Rolle (nicht dargestellt) abgezogen und als zu beschichtender Draht 5 unter die Pressplatte 4 gebracht wird. Nach der Behandlung verlässt er als beschichteter Draht 6 die Einrichtung.

Zum Beschichten wird der Draht 5 durch Hin- und Herbewegen der gehärteten Stahlpressplatte 4 auf der Grundplatte 1 mit einer Diamantstaubbeschichtung 7 versehen, da unter dem auf der Pressplatte 4 ausgeübten Druck, bei einer Presskraft von beispielsweise 200 N der Diamantstaub in den Draht gepresst wird. Während dieses Einpressens muss jedoch - und dies ist eine der grundsätzlichen Bedingungen - der Draht durch die Hin- und Herbewegung der Stahlpressplatte 4 um seine jeweilige Auflagegerade auf der Stahlplatte 1 abgerollt werden, so dass er die Drahtlagen 8, 9 und 10 einnimmt, bei welchem Abrollvorgang gleichzeitig der Diamantstaub eingerollt wird.

Der Draht 5 wird durch Hin- und Herbewegen der Stahlpressplatte 4 auf einer Breite von cirka 15 mm beschichtet. Wenn dies durch Hin- und Herrollen geschehen ist, wird der Druck aufgehoben und der Draht um dieses Mass weitergeschoben. Das Beschichten wird in dieser Art taktweise fortgesetzt.

Auf diese Weise ist es möglich, irgendwelche Teilchen, die härter sind als das Drahtmaterial, in dieses einzuwalzen, wobei darauf zu achten ist, dass der Einwalzdruck nicht zu einem Auswalzvorgang des Drahtes wird. Es muss also der Draht im wesentlichen seinen ursprünglichen Querschnitt beibehalten.

Bei dem zu beschichtenden Draht handelt es sich im allgemeinen um kreisrunden Draht, trotzdem es grundsätzlich möglich wäre, auch andere Rundformen, beispielsweise ovale Drähte, auf diese Weise zu beschichten.

Die besprochene rudimentäre Einrichtung gemäss den Fig. 1 und 2 erlaubt wohl, eine Drahtsäge in taktmässigem Beschichten von Hand zu erstellen, wobei der Diamantstaub entweder direkt als Pulver oder als Suspension auf die Platte 1 gebracht wird. Diese Beschichtungsart ist grundsätzlich sehr zweckmässig, da sie leicht durchführbar und billig ist. Sie ist ferner, was vor allem wichtig ist, zweckentsprechend, indem derartig beschichtete Diamantsägen wesentlich bessere Standzeiten bei sonst gleichen Qualitätseigenschaften aufweisen, als die bisher bekannten Sägen. Zudem sind diese Sägen aufgrund des einfachen Verfahrens billig in der Herstellung.

Es wäre natürlich grundsätzlich möglich, den Draht zwischen mehreren, beispielsweise drei, umfänglich gleichmässig verteilten gekerbten Rollen praktisch wie in einem Dreibackenfutter zu führen, um auf diese Weise den Drahtumfang mit Diamantstaub zu versehen. Eine derartige Einrichtung ist indessen kompliziert im Aufbau und im Betrieb und auf diese Weise hergestellte Drähte waren qualitätsmässig mit den vorbeschriebenen nicht zu vergleichen.

Bei dem Einrollvorgang zum Einpressen des Diamantstaubes oder anderer Hartmaterialstäube ist darauf zu achten, dass der auf den Draht ausgeübte Druck gleichmässig erfolgt, da ansonsten Drahtdeformationen entstehen, die später als Bruchstellen der Drahtsäge in Erscheinung treten.

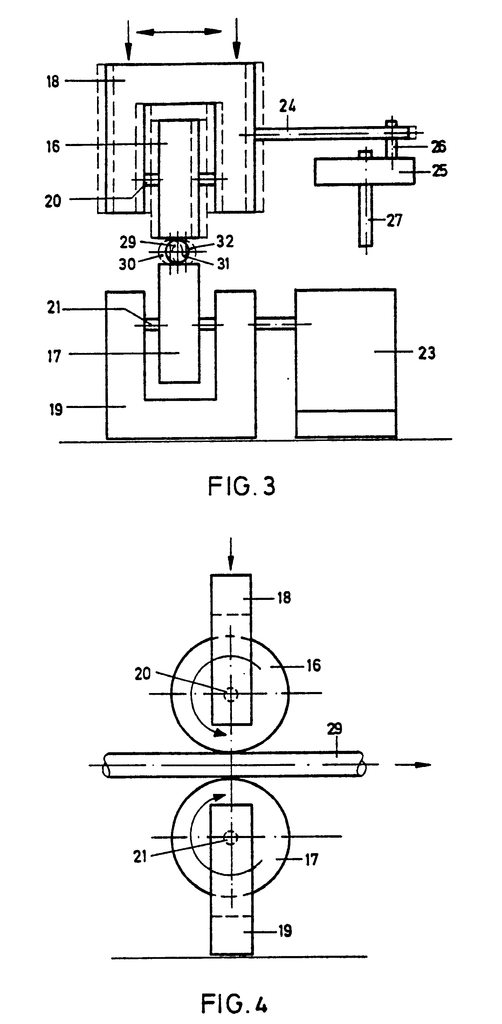

In den Fig. 3 und 4 ist wiederum völlig schematisch eine Vorrichtung dargestellt, mit welcher ein Trägerdraht mit härteren Teilchen maschinell beschichtet werden kann.

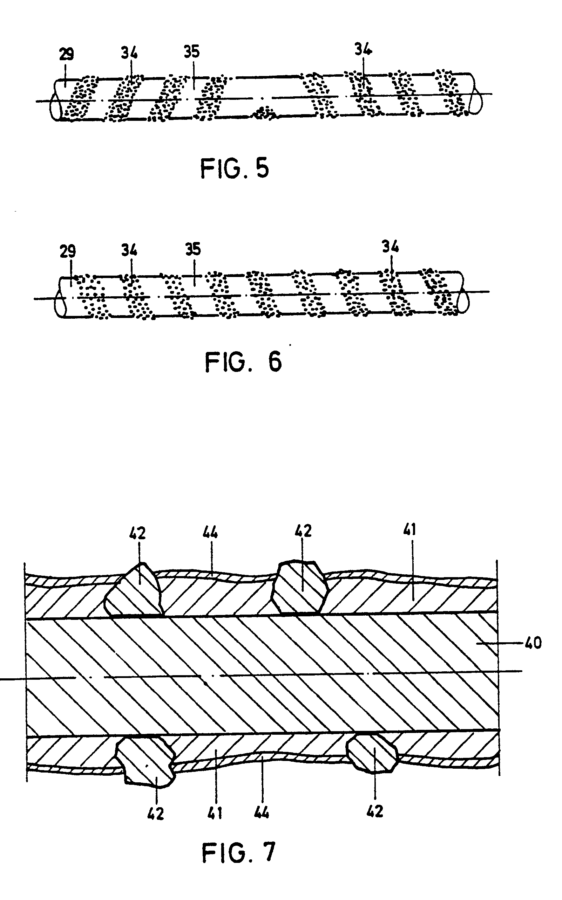

Diese in den Fig. 3 und 4 dargestellte Drahtbeschichtungsvorrichtung 15 weist eine obere Walze 16 und eine untere Walze 17 auf, welche in ihrer Funktion die Stahlplatten 1 und 4 ersetzen. Die untere Walze 17 ist in einem unteren Joch 19, die obere, 16, in einem oberen Joch 18 gefasst. Die beiden Walzen 16 und 17 sind über je eine Welle 20 und 21 mit ihren Jochen 18 und 19 verbunden. Ein Antriebsmotor 23 dient dem Antrieb der Walze 17. Die obere Walze 16 kann mit dieser 17, beispielsweise über Zahnräder, treibend verbunden sein, oder aber, über den Draht angetrieben, praktisch frei mitlaufen. Das obere Joch 18 ist über einen Arm 24 mit einer Drehscheibe 25, die einen Exzenterzapfen 26 trägt, verbunden. Die Drehscheibe 25 weist eine Antriebswelle 27 auf, vorzugsweise mit dem Antriebsmotor 23 gekuppelt. Der Draht 29 wird während des Beschichtens auf dem Mantel der unteren Walze 17 durch Hin- und Herbewegen der oberen Walze 16 die Drahtquerschnittslagen 30, 31 und 32 einnehmen, so dass der auf die Mantelflächen der Walzen 16 und 17 aufgebrachte Diamantstaub - abwechselnd rechts-´und linksgängigschraubenlinienförmig auf den Draht 29 aufgebracht bzw. eingewalzt wird. Eine derartige Diamantstaubbeschichtung 34, die sich schraubenlinienförmig um den Grunddraht 29 erstreckt und Freiräume 35 freilässt, ist in Fig. 5 ersichtlich. Diese Beschichtungsform weist den grossen Vorteil auf, dass die Freiräume 35 der Aufnahme des abgespanten Materials dienen, wodurch beim Sägevorgang die Reibung vom Sägespan unbeeinflusst bleibt, wodurch die Standzeit der Sägen positiv beeinflusst wird. Die beiden Walzen 16 und 17 sind gehärtet und geschliffen. Es ist nicht nur möglich, beide Walzen synchron anzutreiben, sondern auch beide Joche hin und her zu bewegen. Auch hier lässt sich, wie bei der Handeinrichtung gemäss den Fig. 1 und 2 ein taktmässiges Beschichten vornehmen. Der Vorschub des Drahtes 29 erfolgt dabei aufgrund der Haftreibung der angetriebenen Walze und des Drahtes. Durch den weichen Einlauf des Drahtes 29 zwischen die Walzen 16 und 17 wird auch dessen Beschädigung verhütet. Es ist aber bei der Belastung der Walzen 16 und 17 darauf zu achten, dass der Draht 29 zwischen den Walzen nicht auf einen kleineren Querschnitt oder auf eine andere Querschnittsform ausgewalzt wird. Es darf, m.a.W., am Draht keine Einschnürung entstehen.

Es ist natürlich möglich, anstatt eines Antriebsmotors für die Walzen 16 und 17 und die Drehscheibe 25 zwei getrennte Motoren vorzusehen, um damit die Steigung der Diamantstaubbeschichtung 24 nach Belieben zu ändern, sie also insbesondere auch als zusammenhängendes Band aufzutragen.

Ferner ist es grundsätzlich auch möglich, die Vorrichtung so zu synchronisieren, dass die Beschichtung bei der Querbewegung der oberen Walze 16 in einer Richtung ausgeführt und in der anderen Richtung sowohl der Vorschub, als damit auch die Beschichtung ausgesetzt werden. Auf diese Weise entsteht ein schraubenlinienförmiges Band einer Drehrichtung im Sinne der Fig. 6.

Wird dagegen kontinuierlich beschichtet, so entsteht bei der einen Bewegung ein schraubenlinienförmiger Bandteil mit Rechtssteigung und im gegenläufigen Sinn ein anschliessendes Band mit Linkssteigung, wie dies Fig. 5, in welcher der Bereich des Wechselns von Rechts- in Linksdrehung ersichtlich ist, zeigt.

Eine weitere Möglichkeit besteht darin, zwei Drahtbeschichtungsvorrichtungen 15 hintereinander zur Einwirkung auf einen Draht 29 kommen zu lassen, wobei die beiden Vorrichtungen synchron oder im Gegentakt miteinander arbeiten können, so dass es möglich ist, praktisch beliebige schraubenlinienförmige Muster, die sich ergänzen oder überschneiden, rechts- oder linkgsgängig sind o.dgl., herzustellen. Diese Muster werden durch die Durchlaufgeschwindigkeit und den Abstand der beiden Beschichtungseinheiten beeinflusst.

Es ist möglich, im Sinne von Fig. 3 die obere Walze 16 mit dem Joch 18 bezüglich der unteren Walze 17 und dem unteren Joch 19 abzufedern, um durch entsprechende Gewichtsbelastung auf das obere Joch 18 den Druck auf den Draht 29 einstellbar zu gestalten. Es ist aber auch möglich, den Abstand zwischen den beiden Walzen 16 und 17 einstellbar, aber fest, vorzusehen. Dabei muss aber gegebenenfalls ein Abziehen des Drahtes 29 mit Hilfe einer angetriebenen Abzugsvorrichtung vorgesehen werden. Dies ermöglicht den Einwalzdruck für die Diamantteilchen unabhängig von der Sicherheit des Vorschubes zu verändern.

Grundsätzlich wäre auch die Möglichkeit gegeben, zwischen Draht und Vorrichtung eine Drehbewegung um die Längsachse des Drahtes zu erzeugen und dadurch die axiale Bewegung mit einer Drehbewegung zu verbinden, um zur gewünschten schraubenlinienförmigen Beschichtung zu gelangen.

Mit einer derartigen Vorrichtung ist es ferner möglich, einen Draht mit einem billigeren Schleifmittel, wie $Al_2O_3$, $SiO_2$ o. dgl. zu beschichten oder mit einer geringeren Schicht Diamantstaub, wobei eine derartige Drahtsäge für den Einmalgebrauch vorgesehen werden könnte. Bei entsprechender Breite der Rollen 16 und 17, wenn diese also als Walzen ausgebildet sind, können mehrere parallele Drähte 29 gleichzeitig mit Teilchen versehen werden.

Was das Grundmaterial in Form von Draht betrifft, wurden bisher insbesondere Stahldrähte mit Kupferbeschichtung verwendet. Solche Drähte werden für die Zuführung hoher Stromstärken benutzt und sind unter den Namen "Copperweld", "Staku", "Custa" usw. bekannt. Es wurden aber auch schon Versuche mit vernickeltem Stahldraht durchgeführt. Eingehendere Tests zeigten aber, dass praktisch jeder Stahldraht mühelos auf diese Weise beschichtet werden kann, u.a. auch Klaviersaitendraht. Es ist aber nicht auszuschliessen, dass auch andere Drähte sich eignen würden, z. B. aus Kunststoff, insbesondere Polyamid, Polyester u. dgl.

Weitere Versuche zeigten, dass nach dem Beschichten des Drahtes mit Diamant- oder anderem Staub ein zusätzliches Einbetten auf chemische Weise mit Nickel den eingewalzten Diamantteilchen einen besseren Halt gibt und mithin die Sägestandzeiten wesentlich verlängert werden konnten.

In Fig. 7 ist in wesentlich vergrössertem Maßstab ein mmit Diamantstaub beschichteter Draht ersichtlich, auf welchem eine derartige einbettende Schicht aufgebracht ist.

Diese Fig. zeigt einen Ausschnitt aus einem Sägedraht, mit einem Stahldrahtkern 40, einer Kupferhülle 41 und in diese eingewalzte Diamantteilchen 42. Eine chemisch aufgebrachte Nickelschicht 44 bettet die Diamantteilchen 42 ein und verringert damit die Gefahr des Ausbrechens während des Sägevorganges.

Bei einer derartigen Drahtsäge kann der Durchmesser des Stahldrahtkernes 40 beispielsweise 200 µm betragen.

Die Dicke der Kupferschicht kann 25 µm sein und die sich darüber befindende Nickelschicht 5 µm. Es ist dann normal, wenn die, möglichst gleichgrossen, Diamantteilchen ungefähr 10 µm aus der Nickelschicht 44 herausragen.

Normalerweise werden einkristallene Diamanten - natürliche oder künstliche - in der Grössenordnung von 20 bis 40 bzw. 60 µm verwendet. Das Diamantpulver wird mittels Pinsel auf die Walzen aufgetragen, nachdem es mit Schneidflüssigkeit in konzentrierter Form vermischt worden ist.

Ein guter Sägedraht besitzt folgende Eigenschaften:

1. grosse Zugfestigkeit
2. geringe Dehnung
3. grosse Dauerbeanspruchbarkeit auf Biegung
4. derart duktil, dass die Diamantkörner zweckmässig eingewalzt werden können.

Bis jetzt wurden Drähte von 70 µm bis cirka 0,5 mm Durchmesser mit Körnungen von 1 bis 60 µm hergestellt. Es sind aber auch gröbere Körnungen möglich; auch die angegebene chemisch angebrachte Nickelschicht kann dicker sein. Beim Aufbringen derartiger Nickelschichten sollte die Korngrösse 12 µm nicht unterschreiten.

**Patentansprüche**

1. Verfahren zum Aufbringen von härteren Teilchen (2) auf ein kreisrundes oder längskantenloses, drahtförmiges Gebilde (5), um dessen Oberfläche ganz oder teilweise mit den härteren Teilchen (2) zu besetzen, zwecks Herstellung einer Einfach- oder Mehrfachsäge (6), dadurch gekennzeichnet, dass man in einem einzigen Verfahrensschritt sowohl das Auftragen auf das als auch das Einpressen der Teilchen (2) in das Gebilde (5) vornimmt, und dass man das Gebilde (5) während dieses Verfahrensschrittes um seine Längsachse drehend bewegt und es gleichzeitig kontinuierlich oder anschliessend taktweise in Richtung seiner Längsachse verschiebt.

2. Verfahren nach Anspruch 1, dadurch gekennzeichnet, dass man das Gebilde (5, 29) in geradem Zustand, d.h. gestreckt, behandelt.

3. Verfahren nach Anspruch 1, dadurch gekennzeichnet, dass man das Gebilde (5, 29) auf seinem Umfang abrollt.

4. Verfahren nach einem der vorhergehenden Ansprüche, dadurch gekennzeichnet, dass man das Gebilde (5, 29) periodisch hin- und herrollt und das Gebilde (5) gleichzeitig axial bewegt, um, z. B. abwechslungsweise rechts- und linksgängig verlaufende Beschichtungen (34) härterer Teilchen (2, 42) zu erzeugen.

5. Vorrichtung zum Aufbringen von härteren Teilchen auf ein kreisrundes oder längskantenloses drahtförmiges Gebilde (5; 29), insbesondere gehärteten Stahldraht, vorzugsweise nach einem oder mehreren der Ansprüche 1 bis 4, bei der mindestens zwei relativ zueinander bewegbare Flächen von Teilen (1, 4; 16, 17), welche zur Aufnahme von Hartteilchen (41) und des zu beschichtenden Gebildes (5; 29) dienen, vorgesehen sind, dadurch gekennzeichnet, dass diese Flächen gehärtet und geschliffen und zum Rollen des Gebildes (5; 29) um seine Längsachse zwischen diesen zwei Flächen vorgesehen sind, und dass Platten (1, 4) und/oder Walzen (16, 17) dazu dienen, das Gebilde (5; 29) zusätzlich in axialer Richtung zu bewegen, wobei die Rollbewegung des Gebildes (5; 29) von Hand oder maschinell erfolgt.

6. Vorrichtung nach Anspruch 5, dadurch gekennzeichnet, dass eine Walze (17) fest angeordnet und von einem Motor (23) angetrieben wird, während die andere Walze (16) in axialer Richtung, vorzugsweise durch einen ebenfalls vom Motor (23) angetriebenen Exzenter (25, 26) hin- und herbewegbar ist.

**Claims**

1. Process for applying hard particles (2) to a circular or rounded, wire-like structure (5), to cover its surface wholly or partly with the hard particles (2), for the purpose of making a single or multiple saw (6), characterised in that both the application onto as also the impression of the particles (2) into the structure (5) are effected in a single process step, and in that the structure (5) is turned during this process step about its longitudinal axis and is slid at the same time continuously or subsequently at intervals in the direction of its longitudinal axis.

2. Process according to claim 1, characterised in that, the structure (5, 29) is treated in a straight condition, that is to say extended.

3. Process according to claim 1, characterised in that, the structure (5, 29) is rolled on its circumference.

4. Process according to one of the preceding claims, characterised in that the structure (5, 29) is rolled periodically to and fro and is moved simultaneously axially to produce for example alternately right- and left-forward extending coatings (34) of the hard particles (2, 42).

5. Apparatus for applying hard particles to a circular or rounded, wire-like structure (5; 29), in particular hardened steel wire, preferably according to one or more of claims 1 to 4, in which there are provided at least two movable surfaces of parts (1, 4; 16, 17), movable relative to one another, which serve to receive the hard particles (41) and the structure (5; 29) to be coated, characterised in that the surfaces are hardened and ground for rolling the structure (5; 29) about its longitudinal axis between these two surfaces, and in that plates (1, 4) and/or rollers (16, 17) serve to move the structure (5; 29) additionally in an axial direction, whereby the rolling action of the structure (5; 29) is effected manually or mechanically.

6. Apparatus according to claim 5 characterised in that a roller (17) is arranged in position and for driving by a motor (23) whilst the other roller (16) is movable to and fro in an axial direction, preferably by an eccentric (25, 26) also driven by motor (23).

## Revendications

1. Procédé pour appliquer, sur un élément filiforme (5) de section circulaire ou dépourvu d'arêtes longitudinales, des particules plus dures (2), afin de garnir en totalité ou en partie la surface extérieure dudit élément filiforme de ces particules plus dures (2), dans le but de fabriquer une scie simple ou multiple (6), caractérisé en ce que, en une seule et même phase opératoire, on effectue aussi bien le dépôt que l'incrustation des particules (2) dans l'élément (5) et en ce qu'au cours de cette phase opératoire, on entraîne l'élément (5) en rotation autour de son axe longitudinal et on le déplace simultanément selon un mouvement de translation continu ou intermittent dans la direction de son axe longitudinal.

2. Procédé selon la revendication 1, caractérisé en ce que l'on traite l'élément (5, 29) en le plaçant dans un état rectiligne, c'est-à-dire en l'étirant.

3. Procédé selon la revendication 1, caractérisé en ce que l'on roule l'élément (5, 29) sur sa surface périphérique.

4. Procédé selon l'une des revendications précédentes, caractérisé en ce que l'on roule l'élément (5, 29) cyclement dans un sens et dans l'autre et on déplace en même temps l'element (5) le long de son axe pour, par exemple, produire des dépôts (34) de particules plus dures (2, 42) s'étendant alternativement vers la droite et vers la gauche.

5. Dispositif pour appliquer, sur un élément filiforme (5; 29) de section circulaire ou dépourvu d'arêtes longitudinales, notamment un fil d'acier trempé, des particules plus dures, de préférence conformément à l'une ou à plusieurs des revendications 1 à 4, dans lequel sont prévues au moins deux surfaces, déplaçables l'une par rapport à l'autre, de pièces (1, 4; 16, 17) destinées à recevoir des particules dures (41) et l'élément à recouvrir (5; 29), caractérisé en ce que ces surfaces sont durcies et rectifiées et sont conçues pour pouvoir rouler entre elles deux l'élément (5; 29) autour de son axe longitudinal, et en ce que des plaques (1, 4) et/ou des rouleaux (16, 17) sont prévus pour déplacer en plus l'élément (5; 29) dans la direction axiale, le mouvement de roulement de l'élément (5; 29) étant ainsi réalisé manuellement ou mécaniquement.

6. Dispositif selon la revendication 5, caractérisé en ce qu'un rouleau (17) est monté dans une position fixe et est entraîné par un moteur (23) tandis que l'autre rouleau (16) peut être déplacé selon un mouvement de va-et-vient dans la direction axiale, de préférence par l'intermédiaire d'un excentrique (25, 26) également entraîné par le moteur (23).

FIG.1

FIG.2

FIG. 3

FIG. 4

FIG. 5

FIG. 6

FIG. 7